# EUROPEAN PATENT SPECIFICATION

(11) **EP 2 960 699 B1**
(45) Date of publication and mention of the grant of the patent: **16.01.2019**
(21) Application number: 14194667.3
(22) Date of filing: 25.11.2014
(51) Int. Cl.: G02B 6/44

(54) **Installation box having movable support member**
Installationskasten mit beweglichem Stützelement
Boîte d'installation ayant un élément de support mobile

(30) Priority: 27.06.2014 NL 2013083
(43) Date of publication of application: 30.12.2015
(73) Proprietor: Attema B.V., 4203 NJ Gorinchem (NL)
(72) Inventor: de Hoog, Antonie, 4201 EG Gorinchem (NL)
(74) Representative: EP&C

(56) References cited:
- DE-A1-102010 046 075
- FR-A1- 2 766 024
- NL-C2- 1 020 862
- US-A- 2 842 281

## Description

### FIELD OF THE INVENTION

The invention relates to the field of installation material, and more specifically to an installation box intended to be mounted in a hole in a wall, in particular a hole in a wall plate of a hollow wall. More in detail, the invention relates to an installation box having a movable support member. Furthermore, the invention relates to a support member for use in an installation box.

Herein, an installation box is deemed equivalent to an electrical or optical installation box, a junction box, and an electrical or optical junction box. The installation box may be used for housing installation material in general, (junctions between) electrical conductors, electrical signal wires, optical cables or fibers, and may further accommodate switching material, one or more electrical or optical sockets, signaling material, telecommunication material, building automation material, controller or computer material, and the like.

### BACKGROUND OF THE INVENTION

An installation box generally comprises a box wall, including a bottom wall, and a box access opening having an edge defining an opening plane. The box opening may be closed by a cover. Installation boxes are part of an electrical and/or optical installation, and are mounted in a wall of a building, such as an office, a shop, a home, etc.. For mounting the installation box in the wall, a hole is provided in the wall. When the installation box has a substantially circular side wall circumference, the hole in the wall can be made by sawing the hole in the wall material using a hole saw with an appropriate diameter.

A hollow wall comprises two wall plates arranged at a distance from each other, and enclosing a hollow interior space in which installation material including hollow tubing can be installed, and which space thereafter is filled with isolation material. An outside of a first one of the wall plates defines one side of the hollow wall, and an outside of the second one of the wall plates defines the other side of the hollow wall. The installation box is mounted in one of the two wall plates by providing a hole in the wall plate, the hole having dimensions matching the side wall circumference of the installation box, and next inserting the installation box in the hole in the wall plate from an outside thereof.

The installation box needs to be fastened to the wall to prevent it from moving during the installation work and during subsequent use of the electrical and/or optical installation, e.g. when the installation box accommodates installation material on which a user may exert forces, such as a socket in which a plug is inserted and from which the plug is removed again.

References DE 4241390 A1 discloses an installation box for mounting in a hollow wall. The installation box comprises a support flange forming a collar at a box opening. The support flange extends radially from the side wall of the installation box at the box opening. After insertion of the installation box in a hole in a wall plate from the outside or front side thereof, the support flange of the installation box rests on the front side of the wall plate, by extending over the front side of the wall plate in a radial direction around the wall plate opening. The support flange prevents the installation box to move further in the wall plate hole in the insertion direction, and ensures that the installation box opening lies approximately flush with the front side of the wall plate.

The installation box according to the reference further is provided with a plurality of tongues which each can be made to extend radially from the side wall of the installation box, and further can be positioned to rest against the back side of the wall plate. The tongues prevent the installation box to move out of the wall plate hole opposite to said insertion direction. With the cooperating support flange and tongues clamping the wall plate at the front side and the back side thereof near the wall plate hole, the installation box is fixed relative to the wall plate.

References DE 102010046075 A1, FR 2766024 A1 and NL 1020862 A1 also disclose installation boxes for mounting in a hollow wall, and having a radially extending support flange forming a collar at a box opening.

The installation box according to said references and other similar installation boxes can only be inserted into a hole in a wall or wall plate from a front side of the wall or wall plate, where it is arranged for the box opening to lie flush with the front side of the wall or wall plate, since the support flange cannot pass the hole, as intended. This unavoidable part of the installation procedure sometimes is inconvenient in that at a back side the wall or wall plate tubing is installed which can only be coupled to the installation box:
- at a back side of the wall or wall plate, when the installation box has been installed in the hole of the wall or wall plate from the front side of the wall or wall plate, or
- at a front side of the wall or wall plate by temporarily drawing the tubing through the hole of the wall or wall plate, when the installation box has not yet been installed in the hole of the wall or wall plate.

Thus, the building of the wall or erection of the wall plate, which work is usually carried out by a first craftsman, is intertwined with the work to install the components, including the tubing and the installation box, of the electrical or optical installation, which work is usually carried out by a second craftsman different from the first craftsman, making the planning of the work difficult and rendering the work inefficient.

US 2842281 A discloses an electric outlet box attachment which may be used to mount an electric outlet box in a plaster board wall. The outlet box includes a box-like container with an open front end. The container includes side walls. Secured to the rear portions of the side walls by means of fasteners is a pair of retaining members. Each of the retaining members is in the form of a resilient strap which has a flat rear mounting flange through which the fasteners pass. Each strap also includes a ramp-like intermediate portion which slopes outwardly away from its respective side wall. Integrally connected to the forward part of the ramp-like portion is an outwardly open channel shaped cross-sectional socket. The side walls of the container are cut away to provide openings, the openings being aligned with the retaining members and opening through the front face of the container.

Upon mounting the outlet box in a plaster board wall, an opening of desired cross-section therein is provided. The entire outlet box is inserted through the opening. As the retaining members pass through the opening, the ramp portions thereof engage the sides of the opening and move the socket portions into the confines of the container. As the electric outlet box moves through the opening, the ramp-like portions ride over the plaster board wall and when the sockets become aligned therewith, the retaining members snap back to their original position with the portions of the plaster board wall defining vertical edges of the opening being received in the sockets.

### SUMMARY OF THE INVENTION

It would be desirable to provide an installation box which allows a more efficient installation work.

To better address one or more of these concerns, in a first aspect of the invention an installation box is provided for insertion through a hole in a wall or wall plate having dimensions adapted to conform to the outer circumference of a side wall of the installation box, the wall or wall plate having a front side and a back side, and the side wall of the installation box having an edge defining a box opening. The installation box further comprises a support member for supporting the installation box on a front side of a wall at the edge of the box opening. The support member comprises a coupling portion coupling the support member to the side wall of the installation box, and a support portion connected to the coupling portion. The coupling portion is configured to allow the support member to have a first position relative to the installation box in which the support portion is within an outer circumference of the edge of the side wall, and a second position in which the support portion extends beyond the outer circumference of the edge of the side wall. The support member is coupled to the side wall at an interior side thereof. The coupling portion is configured to allow the support member to have the first position relative to the installation box such that the installation box, with the box opening in a leading position, can be pulled, from the front side of the wall or wall plate, to move through the hole in the wall or wall plate from the back side of the wall or wall plate to the front side of the wall or wall plate. The installation box comprises outwardly extending support arms configured to be brought against the back side of the wall or wall plate.

The installation box of the invention, having the support member being movable between the first position and the second position, allows not only an insertion of the box through a hole in a wall or wall plate from the front side thereof, but also from the back side thereof, where the box opening is intended to be facing the front side of the wall or wall plate. To allow such insertion from the back side of the wall or wall plate, the support member is brought into its first position in which the support portion is within an outer circumference of the edge of the side wall. In this first position of the support member, the installation box has outer dimensions, as seen in the plane of the box opening, which are determined by the outer dimensions of the side wall. The corresponding hole in the wall or wall plate has been made to conform to these outer dimensions of the side wall, and consequently the installation box, with the edge of the side wall defining the box opening in a leading position, can be moved through the hole in a direction from the back side of the wall or wall plate to the front side of the wall or wall plate, since the support portion of the support member does not hinder such movement. Then, when said edge of the side wall has passed the front side of the wall or wall plate, the support member may be taken into the second position thereof, in which the support portion of the support member extends beyond the outer circumference of the edge of the side wall. Next, by reversing the direction of movement (i.e. moving the installation box in a direction from the front side of the wall or wall plate to the back side of the wall or wall plate), the (parts of the) support portions extending outside the outer circumference of the edge of the side wall come to rest on the front side of the wall or wall plate to support the installation box on the wall or wall plate at the edge of the box opening. Next, one or more back support members coupled to the installation box can be positioned against the back side of the wall or wall plate, so as to fix the installation box in the hole in the wall or wall plate: the support members at the edge of the box opening prevent the installation box to move in the direction from the front side to the back side of the wall or wall plate, whereas the back support member(s) prevent the installation box to move in the direction from the back side to the front side of the wall or wall plate.

Thus, the support member(s) being movable between the first position and the second position thereof advantageously allow installation work to be completed including a coupling between tubing and the installation box, before mounting the installation box in the wall, and even before any wall or wall plate is erected, even if the installation box would comprise sprouts extending essentially parallel to the box opening plane outside the side wall circumference.

When this installation work is finished, and a wall or wall plate with a hole is provided, the installation box - with the support member(s) in the first position thereof - can be pushed through the hole in the wall or wall part from the back side of the wall or wall plate, or can be pulled through the hole in the wall or wall part from the front side of the wall or wall plate. Hence, electrical and/or optical installation work and wall building work can be planned and done independently from each other, thereby increasing the efficiency of the work.

The support member is coupled to the side wall at an interior side thereof. Situating the coupling at the interior side of the side wall allows for a flexible, simple and effective arrangement of the support member which does not obstruct other components and does not lead to parts extending at the outside of the side wall at undesirable locations thereof.

Preferably, the coupling portion hingably couples the support member to the side wall. The hinge coupling may comprise a body portion and at least one pin extending from the body portion, wherein the side wall comprises a hole accommodating at least part of the pin. The pin slightly tilts or deforms in the hole in the side wall to thereby allow the support member to hinge relative to the side wall. To prevent the pin to leave the hole in the side wall, the pin has a thickened end portion having larger cross-sectional dimensions than the hole, wherein the body portion and the thickened end portion of the pin are configured to be situated at opposite sides of the side wall. Thus, in a manner known per se, the thickened end portion can be pushed through the hole from the interior side of the side wall to the outside of the side wall, in which movement the thickened end portion is temporarily compressed, and takes its original form (by virtue of its elasticity) when it is at the outside of the side wall, thus locking the pin in the hole. The normal forces of use of the support member, when it is in its second position fixing the installation box in the hole, act essentially perpendicularly to the longitudinal direction of the pin, and thus do not act in a direction to move the thickened end portion through the hole.

In an embodiment of the installation box of the invention, at least part of the coupling portion is configured to conform to a shape of an interior side of the side wall. Thus, in particular in the second position of the support member, the coupling portion can align to the interior side of the side wall, leaving an optimum amount of space available inside the installation box.

In a simple and effective embodiment of the installation box of the invention, the coupling portion comprises a plate. At a top edge of the plate of the coupling portion, the support portion is connected, and near a bottom edge of the plate of the coupling portion, one or more pins may be provided. The support portion also preferably comprises a plate which, in the second position of the support member, extends substantially parallel to a plane of the box opening.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a perspective view of an embodiment of an installation box of the present invention configured to be coupled to a similar installation box, wherein Figure 1 shows a box opening and side wall sides of the installation box.
Figure 2 depicts a perspective view of an embodiment of a support member of the present invention for the installation box of Figure 1, on a larger scale than Figure 1.
Figure 3 depicts a bottom view of the support member of Figure 2.
Figure 4 depicts a top view of the installation box of Figure 1, with two support members of Figures 2 and 3 mounted to the installation box.
Figure 5 shows a cross-sectional view of the installation box of Figure 4 along the line A-A thereof.

### DETAILED DESCRIPTION OF EMBODIMENTS

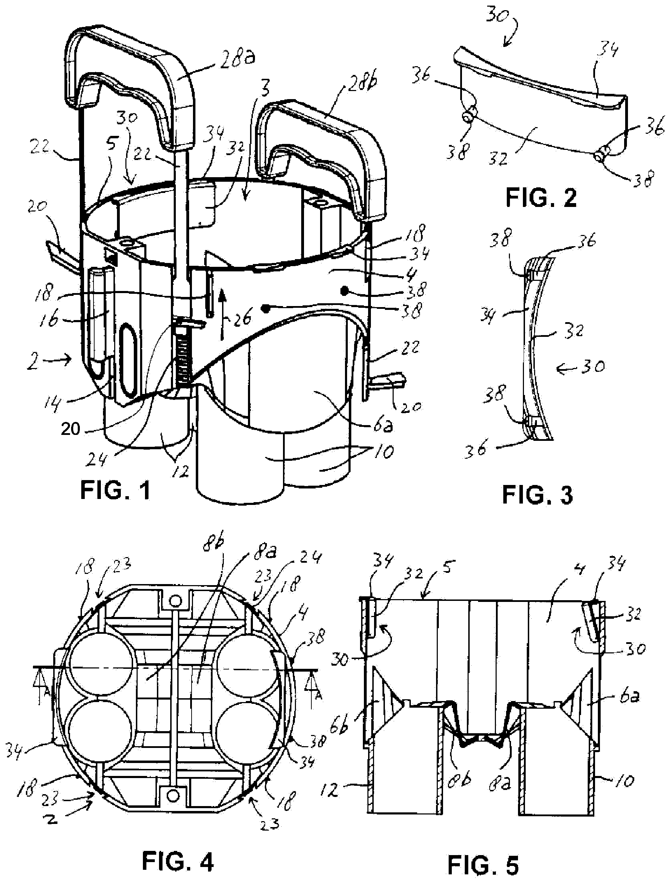

Figures 1, 4 and 5 depict an installation box 2 comprising a relatively rigid cylindrically shaped side wall 4, deformable side wall parts 6a, 6b, deformable bottom wall parts 8a, 8b, a pair of sprouts 10 and a pair of sprouts 12. By virtue of the deformability of the side wall parts 6a, 6b and the bottom wall parts 8a, 8b, each one of the pairs of sprouts 10, 12 can assume different orientations relative to the side wall 4. For the present invention, however, neither the deformability of parts of the installation box 2 nor the presence or configuration or orientation or number of sprouts is essential. Thus, the present invention is applicable to a wide range of installation boxes having a side wall and arbitrary further features.

The installation box 2 has an opening 3 defined by an edge 5 of the side wall 4. The opening 3 extends in a plane.

As shown in Figure 1, in the side wall 4 of the installation box 2, at least one slot 14 is provided into which a coupling member 16 having a generally bone-shaped cross-section (as seen in a plane parallel to the plane of the box opening 3) can be slid for coupling the installation box 2 to another installation box 2 of the same type. At the outside of the side wall, ribs 18 are provided. The ribs 18 extend perpendicular to the plane of the box opening 3, and serve to clamp the installation box 2 in a hole in a wall or wall plate, in particular to prevent a rotation of the installation box 2 in the hole. For the present invention, however, neither the provision of the slot 14 and coupling member 16 nor the provision of the ribs 18 is essential. The present invention is applicable to a wide range of installation boxes including those types lacking said features.

As shown in Figure 1, the installation box 2 is provided with outwardly extending support arms 20 each mounted on a strip 22. A broad portion of the strip 22 carrying the support arm 20 has a back side facing the side wall 4 of the installation box 2, which back side is provided with a ribbed structure adapted to engage a corresponding ribbed structure 24 provided in at a bottom of a slot 23 of the side wall 4. The ribbed structure is configured to allow movement of the broad portion of the strip 22 along the slot 23 of the side wall 4 in a direction of arrow 26, but not in the opposite direction. The broad portions of two strips 22 are connected, through narrow portions of the respective strips 22, to a handle 28a, 28b. By pulling the handle 28a, 28b in the direction of arrow 26, the broad portions of the strips 22 can be displaced in the slots 23 in the direction of arrow 26 relative to the side wall 4.

As shown in Figures 2 and 3, a support member 30 comprises a plate 32. The plate 32 is shaped, in the embodiment shown curved, to conform to the shape of the inside of the side wall 4. Thus, the plate 32 has a concave side and a convex side. At an upper edge of the plate 32, a plate-shaped support portion 34 is provided extending perpendicular to the plate 32 at the convex side thereof. At a convex side of the plate 32, at a distance from the support portion 34, two pins 36 are provided near a bottom edge of the plate 32. Each pin 36 has a thickened end portion 38. The plate 32 can be considered a body portion of a coupling portion of the support member 30, which coupling portion further comprises the pins 36.

When coupling the support member 30 to the side wall 4, the thickened end portions 38 of the pins 36 are moved through corresponding holes in the side wall 4 from the interior side of the side wall 4 to the outside of the side wall 4. In this movement, the thickened end portions 38 may be compressed when passing the hole, and thereafter may elastically take their original shape again to thereby prevent the pins 36 from moving back out of the holes in the side wall 4.

The coupling of the support member 30 to the side wall is a hingable coupling by virtue of some play of the pins 36 in the holes in the side wall 4, and/or a deformability of the pins 36. Accordingly, the support member 30 may hinge or rotate relative to the side wall, as illustrated in Figures 4 and 5. At the right-hand side of the installation box 2 of Figures 4 and 5, a support member 30 is shown being in a first position, wherein a support portion shaped as a plate 34 is within an outer circumference of the edge 5 of the side wall 4. As shown at the left-hand side of the installation box 2 of Figures 4 and 5, a support member 30 is in a second position in which the support portion shaped as a plate 34 extends beyond the outer circumference of the edge 5 of the side wall 4. In this second position the plate 32 lies against the interior side of the side wall 4, and thereby hardly takes any space in the interior of the installation box 2.

With all support members 30 being in a first position, the installation box 2 may be moved (with box opening 3 in a leading position) through a hole in a wall or wall plate having dimensions adapted to conform to the outer circumference of the side wall 4, in the direction of arrow 26, from a back side of the wall or wall plate to a front side of the wall or wall plate. During such movement, the strips 22 near the handles 28a, 28b (where both handles 28a, 28b may be in a position relative to the side wall 4 in between the different positions as shown in Figure 1) may be bent slightly to allow the handles 28a, 28b to pass the hole in the wall or wall plate.

Next, the support members 30 are brought into their second position, the installation box 2 is pushed to the wall or wall plate to bring the plates 34 into contact with the front side of the wall or wall plate, and the handles 28a, 28b are pulled to bring the support arms 20 against the back side of the wall or wall plate. Then, the installation box 2 is fixed in the hole, and the strips 22 can be cut at the edge 5 of the installation box lying essentially flush with the front side of the wall or wall plate. The handles 28a, 28b with the remaining parts of the strips 22 are discarded.

As explained in detail above, an installation box comprises a side wall having an edge defining a box opening, and a support member for supporting the installation box on a wall at the edge of the box opening. The support member comprises a coupling portion coupling the support member to the side wall of the installation box, and a support portion connected to the coupling portion. The coupling portion is configured to allow the support member to have a first position relative to the installation box in which the support portion is within an outer circumference of the edge of the side wall, and a second position in which the support portion extends beyond the outer circumference of the edge of the side wall. The support member is hingably coupled to the side wall at an interior side thereof.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The term coupled, as used herein, is defined as connected.

## Claims

1. An installation box (2) for insertion through a hole in a wall or wall plate having dimensions adapted to conform to the outer circumference of a side wall (4) of the installation box, the wall or wall plate having a front side and a back side, the installation (2) box comprising a side wall (4) having an edge (5) defining a box opening (3), the installation box further comprising:
a support member (30) for supporting the installation box (2) on a front side of a wall at the edge (5) of the box opening (3),
wherein the support member (30) comprises a coupling portion (32, 36) coupling the support member (30) to the side wall (4) of the installation box, and a support portion (34) connected to the coupling portion (32, 36); and
wherein the coupling portion (32, 36) is configured to allow the support member (30) to have a first position relative to the installation box (2) in which the support portion (34) is within an outer circumference of the edge (5) of the side wall (4), and a second position in which the support portion (34) extends beyond the outer circumference of the edge (5) of the side wall (4),
wherein the support member (30) is coupled to the side wall (4) at an interior side thereof;
**characterised in that**:
the coupling portion (32, 36) is configured to allow the support member (30) to have the first position relative to the installation box (2) such that the installation box (2), with the box opening (3) in a leading position, can be pulled, from the front side of the wall or wall plate, to move through the hole in the wall or wall plate from the back side of the wall or wall plate to the front side of the wall or wall plate; and
the installation box comprises outwardly extending support arms (20) configured to be displaced relative to the side wall (4) by pulling them in the direction from the back side of the wall or wall plate to the front side of the wall or wall plate, to bring the support arms (20) against the back side of the wall or wall plate.

2. The installation box (2) according to claim 1, wherein the coupling portion (32, 36) hingably couples the support member (30) to the side wall (4).

3. The installation box (2) according to any of the preceding claims, wherein the coupling portion comprises a body portion (32) and at least one pin (36) extending from the body portion (32), and wherein the side wall (4) comprises a hole accommodating at least part of the pin (36).

4. The installation box (2) according to claim 3, wherein the pin (36) has a thickened end portion (38) having larger cross-sectional dimensions than the hole to prevent the pin (36) to be moved out of the hole, and wherein the body portion (32) and the thickened end portion (38) of the pin (36) are configured to be situated at opposite sides of the side wall (4).

5. The installation box (2) according to any of the preceding claims, wherein at least part of the coupling portion (32, 36) is configured to conform to a shape of an interior side of the side wall (4).

6. The installation box (2) according to any of the preceding claims, wherein the coupling portion comprises a plate (32).

7. The installation box (2) according to any of the preceding claims, wherein the support portion (34) comprises a plate which, in the second position of the support member (30), extends substantially parallel to a plane of the box opening (3).

8. The installation box (2) according to claim 6, wherein the support portion (34) comprises a plate extending perpendicular to the plate (32) of the coupling portion.

## Patentansprüche

1. Eine Installationsbox (2) zum Einführen durch ein Loch in einer Wand oder einer Wandplatte, das Abmessungen hat, welche an den äußeren Umfang einer Seitenwand (4) der Installationsbox angepasst sind, wobei die Wand oder die Wandplatte eine Vorderseite und eine Rückseite aufweist, wobei die Installationsbox (2) eine Seitenwand (4) mit einem eine Boxöffnung (3) definierenden Rand (5) hat, wobei der Installationsbox ferner aufweist:
ein Stützglied (30) zur Abstützung der Installationsbox (2) an einer Vorderseite einer Wand am Rand (5) der Boxöffnung (3),
wobei das Stützglied (30) einen Kopplungsabschnitt (32, 36), der das Stützglied (30) an der Seitenwand (4) der Installationsbox koppelt und einen Stützabschnitt (34), der mit dem Kopplungsabschnitt (32, 36) verbunden ist, aufweist; und
wobei der Kopplungsabschnitt (32, 36) ausgebildet ist, um es dem Stützglied (30) zu ermöglichen, eine erste Position relativ zu der Installationsbox (2) einzunehmen, in der sich der Stützabschnitt (34) innerhalb eines Außenumfangs des Randes (5) der Seitenwand (4) befindet, und eine zweite Position, in der der Stützabschnitt (34) über den Außenumfang des Randes (5) der Seitenwand (4) hinausreicht,
wobei das Stützelement (30) an seiner Innenseite mit der Seitenwand (4) gekoppelt ist,
**dadurch gekennzeichnet, dass** der Kopplungsabschnitt (32, 36) ausgebildet ist, es dem Stützglied (30) zu ermöglichen, die erste Position relativ zu der Installationsbox (2) dergestalt einzunehmen, dass die Installationsbox (2), mit der Boxöffnung (3) in einer führenden Position, von der Vorderseite der Wand oder der Wandplatte gezogen werden kann, um sich durch das Loch in der Wand oder Wandplatte von der Rückseite der Wand oder Wandplatte zu der Vorderseite der Wand oder Wandplatte zu bewegen; und
dass die Installationsbox nach außen ragende Stützarme (20) aufweist, die relativ zur Seitenwand (4) verschiebbar ausgebildet sind, indem sie in Richtung von der Rückseite der Wand oder Wandplatte zur Vorderseite der Wand oder Wandplatte gezogen werden, um die Stützarme (20) gegen die Rückseite der Wand oder Wandplatte zu bringen.

2. Die Installationsbox (2) nach Anspruch 1, wobei der Kopplungsabschnitt (32, 36) das Stützglied (30) schwenkbar mit der Seitenwand (4) koppelt.

3. Die Installationsbox (2) nach einem oder mehreren der vorhergehenden Ansprüche, wobei der Kopplungsabschnitt einen Körperabschnitt (32) und mindestens einen Stift (36) umfasst, der sich von dem Körperabschnitt (32) erstreckt, und wobei die Seitenwand (4) ein Loch umfasst, das zumindest einen Teil des Stifts (36) aufnimmt.

4. Die Installationsbox (2) nach Anspruch 3, wobei der Stift (36) einen verdickten Endabschnitt (38) mit größeren Querschnittsabmessungen als das Loch aufweist, um zu verhindern, dass der Stift (36) aus dem Loch herausbewegt wird, und wobei der Körperabschnitt (32) und der verdickte Endabschnitt (38) des Stiftes (36) so ausgelegt sind, dass sie an gegenüberliegenden Seiten der Seitenwand (4) angeordnet sind.

5. Die Installationsbox (2) nach einem oder mehreren der vorhergehenden Ansprüche, wobei zumindest ein Teil des Kopplungsabschnitts (32, 36) ausgebildet ist, der Form einer Innenseite der Seitenwand (4) zu entsprechen.

6. Die Installationsbox (2) nach einem oder mehreren der vorhergehenden Ansprüche, wobei der Kopplungsabschnitt eine Platte (32) umfasst.

7. Die Installationsbox (2) nach einem oder mehreren der vorhergehenden Ansprüche, wobei der Stützabschnitt (34) eine Platte aufweist, die sich in der zweiten Position des Stützglieds (30) im Wesentlichen parallel zu einer Ebene der Boxöffnung (3) erstreckt.

8. Die Installationsbox (2) nach Anspruch 6, wobei der Stützabschnitt (34) eine Platte aufweist, die sich senkrecht zu der Platte (32) des Kopplungsabschnitts erstreckt.

## Revendications

1. Une boîte d'installation (2) pour insertion à travers un trou dans un mur ou une plaque murale ayant des dimensions adéquates pour se conformer à la circonférence extérieure d'une paroi latérale (4) de la boîte d'installation, le mur ou la plaque murale ayant une face avant et une face arrière, la boîte d'installation (2) comprenant une paroi latérale (4) ayant un bord (5) définissant une ouverture de boîte (3), la boîte d'installation comprenant en outre :
un élément de support (30) destiné à supporter la boîte d'installation (2) sur une face avant d'un mur au bord (5) de l'ouverture de boîte (3),
dans laquelle l'élément de support (30) comprend une partie de couplage (32, 36) couplant l'élément de support (30) à la paroi latérale (4) de la boîte d'installation et une partie de support (34) reliée à la partie de couplage (32, 36) ; et
dans laquelle la partie de couplage (32, 36) est configurée pour permettre à l'élément de support (30) d'avoir une première position par rapport à la boîte d'installation (2) dans laquelle la partie de support (34) se trouve à l'intérieur d'une circonférence extérieure du bord (5) de la paroi latérale (4), et une seconde position dans laquelle la partie de support (34) s'étend au-delà la circonférence extérieure du bord (5) de la paroi latérale (4),
dans laquelle l'élément de support (30) est couplé à la paroi latérale (4) à un côté intérieur de celle-ci ; **caractérisée en ce que**
la partie de couplage (32, 36) est arrangée de manière à permettre à l'élément de support (30) d'avoir la première position par rapport à la boîte d'installation (2), de telle sorte que la boîte d'installation (2), avec l'ouverture de boîte (3) dans une position directrice, peut être tirée à partir de la face avant du mur ou de la plaque murale, pour être déplacée à travers le trou dans le mur ou la plaque murale de la face arrière du mur ou de la plaque murale vers la face avant du mur ou de la plaque murale ; et
la boîte d'installation comprend des bras de support (20) s'étendant vers l'extérieur et arrangés pour être déplacés par rapport à la paroi latérale (4) en les tirant dans la direction allant de la face arrière du mur ou de la plaque murale vers la face avant du mur ou de la plaque murale, pour amener les bras de support (20) contre la face arrière du mur ou de la plaque murale.

2. La boîte d'installation (2) selon la revendication 1, dans laquelle la partie de couplage (32, 36) couple de manière articulée l'élément de support (30) à la paroi latérale (4).

3. La boîte d'installation (2) selon l'une quelconque des revendications précédentes, dans laquelle la partie de couplage comprend une partie de corps (32) et au moins une broche (36) s'étendant à partir de la partie de corps (32), et dans laquelle la paroi latérale (4) comprend un trou recevant au moins une partie de la broche (36).

4. La boîte d'installation (2) selon la revendication 3, dans laquelle la broche (36) a une partie d'extrémité épaissie (38) ayant des dimensions transversales plus grandes que le trou pour empêcher la broche (36) d'être déplacée hors du trou, et dans laquelle la partie de corps (32) et la partie d'extrémité épaissie (38) de la broche (36) sont arrangées pour être situés à des côtés opposées de la paroi latérale (4).

5. La boîte d'installation (2) selon l'une quelconque des revendications précédentes, dans laquelle au moins une partie de la partie de couplage (32, 36) est arrangée pour se conformer à une forme d'un côté intérieur de la paroi latérale (4).

6. La boîte d'installation (2) selon l'une quelconque des revendications précédentes, dans laquelle la partie de couplage comprend une plaque (32).

7. La boîte d'installation (2) selon l'une quelconque des revendications précédentes, dans laquelle la partie de support (34) comprend une plaque qui, dans la seconde position de l'élément de support (30), s'étend sensiblement parallèlement à un plan de l'ouverture de la boîte (3).

8. La boîte d'installation (2) selon la revendication 6, dans laquelle la partie de support (34) comprend une plaque s'étendant perpendiculairement à la plaque (32) de la partie de couplage.
